(19) Europäisches Patentamt
European Patent Office
Office européen des brevets

(11) EP 4 769 626 A1

(12) EUROPEAN PATENT APPLICATION

(43) Date of publication:
**01.07.2026 Bulletin 2026/27**

(21) Application number: **25226705.9**

(22) Date of filing: **23.12.2025**

(51) International Patent Classification (IPC):
***H01M 10/0568*** *(2010.01)* ***H01M 10/42*** *(2006.01)*

(52) Cooperative Patent Classification (CPC):
**H01M 10/0568; H01M 10/4235;** H01M 10/0525

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.12.2024 KR 20240201272**

(71) Applicants:
- **SK On Co., Ltd.**
  **Seoul 03161 (KR)**
- **SK Innovation Co., Ltd.**
  **Seoul 03188 (KR)**

(72) Inventors:
- **JEONG, Myung Hwan**
  **34124 Daejeon (KR)**
- **LEE, Hyun Ho**
  **34124 Daejeon (KR)**
- **JIN, Seong Ho**
  **34124 Daejeon (KR)**
- **CHO, In Haeng**
  **34124 Daejeon (KR)**

(74) Representative: **Prüfer & Partner mbB**
**Patentanwälte · Rechtsanwälte**
**Sohnckestraße 12**
**81479 München (DE)**

# (54) ELECTROLYTE FOR LITHIUM SECONDARY BATTERY AND LITHIUM SECONDARY BATTERY INCLUDING THE SAME

(57) According to exemplary embodiments, the lithium secondary battery electrolyte includes a sulfonyl compound including a cyano group and a lithium salt. According to exemplary embodiments, the lithium secondary battery includes an electrode assembly including a cathode and an anode and the electrolyte for a lithium secondary battery. Accordingly, a lithium secondary battery comprising the lithium secondary battery electrolyte has improved high-voltage characteristics and high-temperature stability.

[FIG. 1]

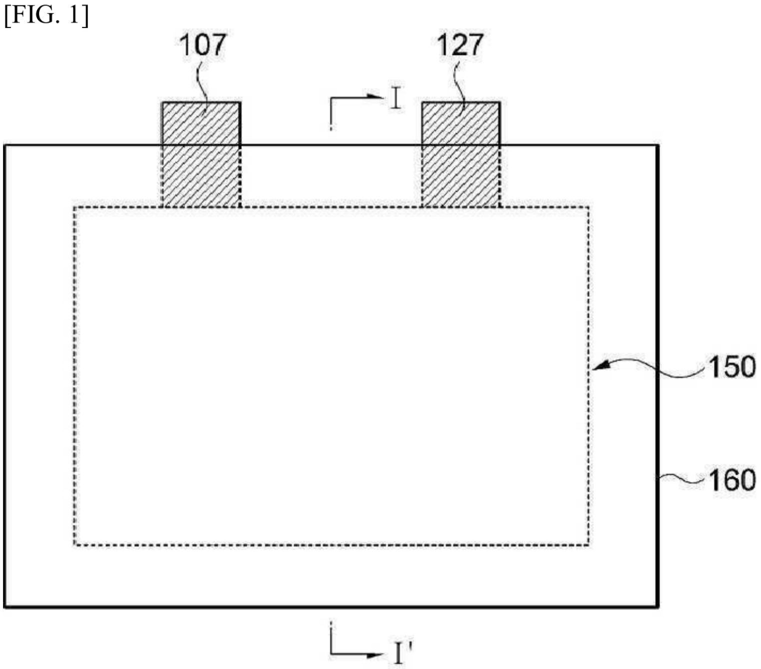




Processed by Luminess, 75001 PARIS (FR)

## Description

### TECHNICAL FIELD

The present disclosure relates to batteries such as a lithium secondary batteries.

### BACKGROUND

Secondary batteries are rechargeable batteries that can be repeatedly charged and discharged, and have been widely applied as power sources for portable electronic devices, such as mobile phones and laptop PCs. Among secondary batteries, a lithium secondary battery has a high operating voltage and a high energy density per unit weight, making it advantageous in terms of charging speed and weight reduction. In this regard, the lithium secondary battery has been actively developed and applied in various industrial fields.

A lithium secondary battery may include, for example, an electrode assembly including a cathode, an anode and a separator interposed between the cathode and the anode, and an electrolyte that impregnates the electrode assembly.

The lithium secondary battery may further include, for example, an outer case in the form of a pouch for accommodating the electrode assembly and the electrolyte.

The cathode of a lithium secondary battery may be fabricated by, for example, applying a cathode slurry including a cathode active material, a binder, and, optionally, a conductive material, to a cathode current collector, followed by drying and roll-pressing.

When a lithium secondary battery is repeatedly charged and discharged, side reactions between the cathode active material and the electrolyte may occur, thereby degrading the stability and cycle life characteristics of the lithium secondary battery.

### SUMMARY

The present disclosure relates to technical features of secondary batteries, including the composition of an electrolyte for a lithium secondary battery that includes a sulfonyl compound and an electrolyte salt.

The technical features of the present disclosure can be implemented to, in various applications, provide an electrolyte for a lithium secondary battery having improved high-voltage and high-temperature characteristics.

The technical features of the present disclosure can be implemented to also provide, in various applications, a lithium secondary battery having improved high-voltage and high-temperature characteristics.

An electrolyte for a lithium secondary battery according to exemplary embodiments of the present disclosure may include: a sulfonyl compound including a cyano group; and a lithium salt.

In some embodiments, the sulfonyl compound may be a sulfonyl ester compound or a sulfonyl amide compound.

In some embodiments, the sulfonyl compound may be represented by Formula 1 below:

[Formula 1]

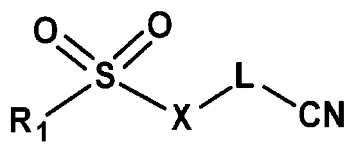

In Formula 1, $R_1$ may be a substituted or unsubstituted alkyl group having 1 to 30 carbon atoms, a substituted or unsubstituted alkoxy group having 1 to 30 carbon atoms, or a substituted or unsubstituted aryl group having 6 to 30 carbon atoms, X may be O or NR, R may be an alkyl group having 1 to 30 carbon atoms that is unsubstituted or substituted with a cyano group (CN), and L may be a substituted or unsubstituted alkylene group having 1 to 30 carbon atoms.

In some embodiments, $R_1$ may be a substituted or unsubstituted alkyl group having 1 to 20 carbon atoms, a substituted or unsubstituted alkoxy group having 1 to 20 carbon atoms, or a substituted or unsubstituted aryl group having 6 to 20 carbon atoms, X may be O or NR, R may be a CN-substituted alkyl group having 1 to 20 carbon atoms, and L may be a substituted or unsubstituted alkylene group having 1 to 20 carbon atoms.

In some embodiments, $R_1$ may be a substituted or unsubstituted alkyl group having 1 to 10 carbon atoms, a substituted or unsubstituted alkoxy group having 1 to 10 carbon atoms, or a substituted or unsubstituted aryl group having 6 to 12 carbon atoms, X may be O or NR, R may be an alkyl group having 1 to 10 carbon atoms substituted with a cyano group (CN), and L may be a substituted or unsubstituted alkylene group having 1 to 10 carbon atoms.

In some embodiments, $R_1$ may be a methyl group or a phenyl group, X may be O or NR, R may be an ethyl group substituted with a cyano group (CN), and L may be a methylene group or an ethylene group.

In some embodiments, the sulfonyl compound may include a compound represented by any one of Formulas 2-1 to 2-6 below:

[Formula 2-1]

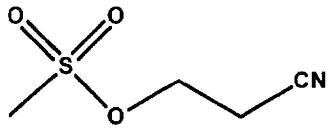

[Formula 2-2]

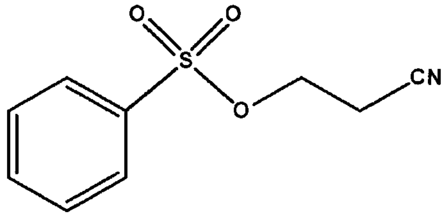

[Formula 2-3]

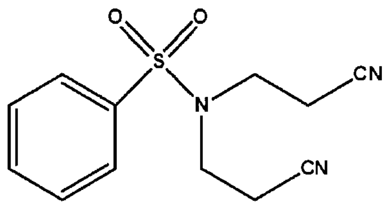

[Formula 2-4]

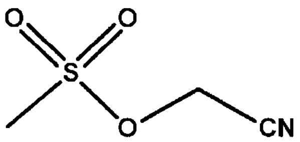

[Formula 2-5]

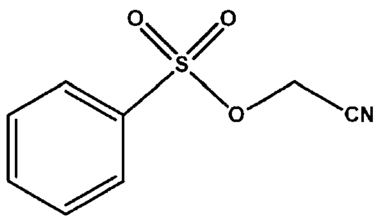

[Formula 2-6]

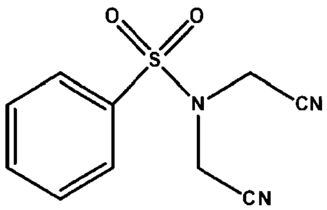

.

In some embodiments, the electrolyte for a lithium secondary battery may further include an organic solvent, wherein the organic solvent may include at least one selected from a carbonate-based solvent, an ester-based solvent, an ether-based solvent, a ketone-based solvent, or an aprotic solvent.

In some embodiments, the organic solvent may include a cyclic carbonate-based solvent and a linear carbonate-based solvent.

In some embodiments, the content of the sulfonyl compound may be 0.1% by weight to 10% by weight based on the total weight of the electrolyte for a lithium secondary battery.

In some embodiments, the electrolyte for a lithium secondary battery may further include at least one auxiliary additive selected from a cyclic carbonate compound, a fluorine-containing carbonate compound, a lithium phosphate compound, a sultone compound, a borate compound, or a sulfate compound.

In some embodiments, the total content of the auxiliary additive may be 0.01% by weight to 10% by weight based on the total weight of the electrolyte for a lithium secondary battery.

In some embodiments, the electrolyte for a lithium secondary battery may further include an auxiliary additive including a cyclic carbonate compound and a fluorine-containing carbonate compound.

A lithium secondary battery according to exemplary embodiments of the present disclosure may include: an electrode assembly including a cathode and an anode; and the electrolyte for a lithium secondary battery.

In some embodiments, the cathode may include lithium metal oxide particles having a single-particle structure.

In some embodiments, the nickel content of the lithium metal oxide particles, excluding lithium and oxygen, may be 50 mol% or more and less than 70 mol%.

In some embodiments, the lithium secondary battery may have an operating voltage of 4.35 V to 4.5 V.

In some embodiments, the cathode or the anode may include a solid-electrolyte interphase (SEI) film on its surface, and the solid-electrolyte interphase film may be formed from the lithium secondary battery electrolyte.

The electrolyte for a lithium secondary battery according to exemplary embodiments may form a uniform and highly ionic-conductive solid-electrolyte interphase (SEI) on the electrode surface.

The lithium secondary battery according to exemplary embodiments may include the electrolyte for a lithium secondary battery, thereby exhibiting improved cycle life characteristics and high-temperature storage characteristics.

The electrolyte may be widely applied in green technology fields using batteries, such as electric vehicles, battery charging stations, solar power generation, wind power generation, etc. In addition, the lithium secondary battery may be used in eco-friendly electric vehicles, hybrid vehicles, or others, which may be used for mitigating climate change by reducing air pollution and/or greenhouse gas emissions.

BRIEF DESCRIPTION OF THE DRAWINGS

The above and other features and advantages of the present disclosure will be more clearly understood from examples in the following detailed description taken in conjunction with the accompanying drawings, in which:

FIG. 1 is a schematic plan view of a lithium secondary battery according to exemplary embodiments; and
FIG. 2 is a schematic cross-sectional view of a lithium secondary battery according to exemplary embodiments.

In FIGS. 1 and 2, the following numerals are used:

100: Cathode
105: Cathode current collector
110: Cathode active material layer
120: Anode active material layer
125: Anode current collector
130: Anode
140: Separator

150: Electrode assembly
160: Case

DETAILED DESCRIPTION

An electrolyte for a lithium secondary battery according to exemplary embodiments may include a compound having a specific chemical structure and a lithium salt.

In addition, a lithium secondary battery according to exemplary embodiments may include an electrode assembly including a cathode and an anode; and the electrolyte for a lithium secondary battery. The electrode assembly may include cathodes and anodes that are repeatedly stacked, and the electrolyte may impregnate the electrode assembly.

Furthermore, the lithium secondary battery according to exemplary embodiments may include an electrode assembly including a cathode and an anode, and a solid-electrolyte interphase (SEI) film disposed on the cathode or the anode. The solid-electrolyte interphase film may be formed from the lithium secondary battery electrolyte, and the solid-electrolyte interphase film may include a structure (e.g., a functional group) derived from a sulfonyl compound having a cyano group included in the lithium secondary electrolyte. Accordingly, the high-voltage characteristics and high-temperature storage characteristics of lithium secondary batteries may be enhanced.

As used herein, the term "high voltage" refers to operating a battery at a voltage in the range of 4.3 V to 4.7 V, specifically in the range of 4.35 V to 4.5 V or higher.

As used herein, the term "A-based compound" may refer to a compound including a functional group A or a derivative thereof.

The term "substituted or unsubstituted" as used herein may refer to a group in which an atom is substituted or unsubstituted with one or more substituents selected from , for example, a deuterium atom, a halogen atom, a cyano group, a nitro group, an amino group, a silyl group, an oxy group, a thio group, a sulfinyl group, a sulfonyl group, a carbonyl group, an ester group, boron, a phosphine oxide group, a phosphine sulfide group, an alkyl group (e.g., a $C_1$-$C_{60}$, or a $C_1$-$C_{10}$ alkyl group), an alkenyl group (e.g., a $C_2$-$C_{60}$, or a $C_2$-$C_{10}$ alkenyl group), an alkynyl group (e.g., a $C_2$-$C_{60}$, or a $C_2$-$C_{10}$ alkynyl group), an alkoxy group (e.g., a $C_1$-$C_{60}$, or a $C_1$-$C_{10}$ alkoxy group), a hydrocarbon ring group, an aryl group (e.g., a $C_6$-$C_{60}$ aryl group), or a heterocyclic group (e.g., a $C_1$-$C_{60}$ heterocyclic group). For example, the "substituted alkyl group" may refer to a group in which at least one hydrogen atom of the alkyl group is substituted with the above-described substituent, thereby allowing a substituent to be further bound to a carbon atom of the alkyl group.

The substituent may include a combination of groups selected from those described above. For example, at least one hydrogen atom of the alkyl group, aryl group, etc. included as a substituent may be substituted with a deuterium atom, a halogen atom, a cyano group, a nitro group, an amino group, a silyl group, an oxy group, a thio group, a sulfinyl group, a sulfonyl group, a carbonyl group, an ester group, boron, a phosphine oxide group, a phosphine sulfide group, an alkyl group, an alkenyl group, an alkynyl group, a hydrocarbon ring group, an aryl group, or a heterocyclic group.

Among the substituents, multivalent substituents such as an amino group, a phosphine sulfide group, a phosphine oxide group, a sulfinyl group, a sulfonyl group, an oxy group, a carbonyl group, and an ester group may be substituted with a $C_1$-$C_{10}$ alkyl group, a $C_1$-$C_{10}$ alkenyl group, a $C_1$-$C_{10}$ alkynyl group, or an aryl group having 6 to 10 carbon atoms.

In the term "substituted or unsubstituted Y group having a to b carbon atoms" as used herein, the carbon number a to b refers to the number of carbon atoms in the unsubstituted Y group and excludes the number of carbon atoms included in any substituent.

The term "alkyl group" may refer to a monovalent hydrocarbon group derived from a straight-chain or branched-chain hydrocarbon by the removal of one hydrogen atom. For example, the alkyl group may include a methyl group, an ethyl group, a propyl group, a sec-butyl group, a tert-butyl group, an iso-butyl group, a pentyl group, a neopentyl group, a 2-ethylbutyl group, a 3,3-dimethylbutyl group, a hexyl group, a heptyl group, an octyl group, etc.

The term "alkylene group" may refer to a divalent hydrocarbon group derived from a straight-chain or branched-chain hydrocarbon by the removal of two hydrogen atoms.

The term "aryl group" may refer to a monovalent hydrocarbon group derived from a hydrocarbon group having an aromatic structure by the removal of one hydrogen atom. The aryl group may include a group in which a plurality of aromatic rings are directly linked, such as a biphenyl group. The aryl group may include, for example, a phenyl group, a naphthyl group, an anthracenyl group, a phenanthrenyl group, a pyrenyl group, a fluorenyl group, a tetracenyl group, a biphenyl group, a terphenyl group, a quaterphenyl group, a chrysenyl group, etc.

A group in which two or more aryl rings are fused or linked through an alicyclic hydrocarbon ring, such as a fluorenyl group, is also included in the category of aryl groups.

For example, a biphenyl group may be interpreted either as an aryl group or as a phenyl group substituted with another phenyl group.

Hereinafter, the embodiments of the present disclosure will be described in detail. However, the embodiments

are merely illustrative, and the present disclosure is not limited to the specific embodiments described as examples.

The electrolyte for a lithium secondary battery (hereinafter, abbreviated as "electrolyte") according to exemplary embodiments may include a sulfonyl compound including a cyano group and a lithium salt. The electrolyte may be a liquid electrolyte or a semi-solid electrolyte, and the semi-solid electrolyte may include a gel polymer electrolyte.

Hereinafter, the components of the present disclosure will be described in more detail.

An electrolyte for the lithium secondary battery according to exemplary embodiments may include a sulfonyl compound including a cyano group and a lithium salt.

The sulfonyl compound may serve as an additive. The additive may be included in an amount greater than 0% by weight ("wt%") and not more than 10 wt% based on the total weight of the electrolyte.

In some embodiments, the sulfonyl compound may be a sulfonyl ester compound or a sulfonyl amide compound.

Although not intended to be bound by any particular theory, since the sulfonyl group tends to undergo reductive decomposition, the use of an electrolyte including the sulfonyl compound may form a robust sulfonyl-based solid-electrolyte interphase film on the anode surface, while the cyano group (CN) may form an adsorption-type film on the cathode surface. The formation of these films on the cathode and anode may stably protect the electrode surfaces and, by stabilizing the electrode interface, may suppress side reactions with the electrolyte.

Accordingly, additional decomposition of the lithium salt may be suppressed, thereby effectively preventing the decomposition of the organic solvent at high temperatures, reducing gas generation, and suppressing an increase in battery thickness.

In addition, although not intended to be bound by any particular theory, the film formed by the sulfonyl compound may have low resistance, thereby facilitating the migration of Li between the electrode and the electrolyte and improving the cycle life of the secondary battery by minimizing performance degradation during repeated charge and discharge under high-voltage conditions.

In some embodiments, the sulfonyl compound may be represented by Formula 1 below.

[Formula 1]

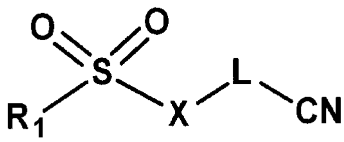

In Formula 1, $R_1$ is a substituted or unsubstituted alkyl group having 1 to 30 carbon atoms, a substituted or unsubstituted alkoxy group having 1 to 30 carbon atoms, or a substituted or unsubstituted aryl group having 6 to 30 carbon atoms, X may be O or NR, R may be an alkyl group having 1 to 30 carbon atoms that is unsubstituted or substituted with a cyano group (-CN), and L may be a substituted or unsubstituted alkylene group having 1 to 30 carbon atoms.

In some embodiments, the substituted or unsubstituted alkyl group of $R_1$ may be specifically a substituted or unsubstituted alkyl group having 1 to 20 carbon atoms, a substituted or unsubstituted alkyl group having 1 to 10 carbon atoms, a substituted or unsubstituted alkyl group having 1 to 4 carbon atoms, a substituted or unsubstituted ethyl group, or a substituted or unsubstituted methyl group.

In some embodiments, the substituted or unsubstituted alkoxy group of $R_1$ may be specifically a substituted or unsubstituted alkoxy group of $R_1$ having 1 to 20 carbon atoms, a substituted or unsubstituted alkoxy group of $R_1$ having 1 to 10 carbon atoms, a substituted or unsubstituted alkoxy group of $R_1$ having 1 to 4 carbon atoms, a substituted or unsubstituted ethoxy group, or a substituted or unsubstituted methoxy group.

In some embodiments, the substituted or unsubstituted aryl group of $R_1$ may be specifically a substituted or unsubstituted aryl group of $R_1$ having 6 to 20 carbon atoms, a substituted or unsubstituted naphthyl group, or a substituted or unsubstituted phenyl group.

In some embodiments, $R_1$ may be a substituted or unsubstituted alkyl group of $R_1$ having 1 to 20 carbon atoms, a substituted or unsubstituted alkoxy group of $R_1$ having 1 to 20 carbon atoms, or a substituted or unsubstituted aryl group of $R_1$ having 6 to 20 carbon atoms; $R_1$ may be a substituted or unsubstituted alkyl group having 1 to 10 carbon atoms, a substituted or unsubstituted alkoxy group having 1 to 10 carbon atoms, or a substituted or unsubstituted aryl group having 6 to 12 carbon atoms; $R_1$ may be a substituted or unsubstituted methyl group or a substituted or unsubstituted phenyl group; or $R_1$ may be a methyl group or a phenyl group.

In some embodiments, the alkyl group having 1 to 30 carbon atoms that is unsubstituted or substituted with a cyano group of R may be specifically an alkyl group having 1 to 20 carbon atoms that is unsubstituted or substituted with a cyano group, an alkyl group having 1 to 10 carbon atoms that is unsubstituted or substituted with a cyano group, an alkyl group having 1 to 4 carbon atoms that is unsubstituted or substituted with a cyano group, an ethyl group that is unsubstituted or substituted with a cyano group, or a methyl group that is unsubstituted or substituted with a cyano group.

In some embodiments, the substituted or unsubstituted alkylene group of L may be specifically a substituted or

unsubstituted alkylene group having 1 to 20 carbon atoms, a substituted or unsubstituted alkylene group having 1 to 10 carbon atoms, a substituted or unsubstituted alkylene group having 1 to 4 carbon atoms, a substituted or unsubstituted ethylene group, or a substituted or unsubstituted methylene group.

In some embodiments, $R_1$ may be a substituted or unsubstituted alkyl group having 1 to 20 carbon atoms, a substituted or unsubstituted alkoxy group having 1 to 20 carbon atoms, or a substituted or unsubstituted aryl group having 6 to 20 carbon atoms, X may be O or NR, R may be a substituted or unsubstituted alkyl group having 1 to 20 carbon atoms, and L may be a substituted or unsubstituted alkylene group having 1 to 20 carbon atoms.

In some embodiments, $R_1$ is a substituted or unsubstituted alkyl group having 1 to 10 carbon atoms, a substituted or unsubstituted alkoxy group having 1 to 10 carbon atoms, or a substituted or unsubstituted aryl group having 6 to 12 carbon atoms, X may be O or NR, R may be a substituted or unsubstituted alkyl group having 1 to 10 carbon atoms, and L may be a substituted or unsubstituted alkylene group having 1 to 10 carbon atoms.

In some embodiments, $R_1$ may be a substituted or unsubstituted methyl group or a substituted or unsubstituted phenyl group, X may be O or NR, R may be an ethyl group substituted with a cyano group (CN), and L may be a substituted or unsubstituted methylene group or a substituted or unsubstituted ethylene group.

In some embodiments, $R_1$ is a methyl group or a phenyl group, X may be O or NR, R may be an ethyl group substituted with CN, and L may be a methylene group or an ethylene group.

In some embodiments, $R_1$ may be a methyl group.

In some embodiments, $R_1$ may be a phenyl group.

In some embodiments, X may be O.

In some embodiments, X may be NR, and R may be an ethyl group substituted with CN.

In some embodiments, L may be an ethylene group.

In some embodiments, the sulfonyl compound may include a compound represented by any one of Formulae 2-1 to 2-6 below.

[Formula 2-1]

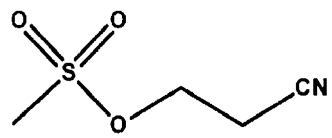

[Formula 2-2]

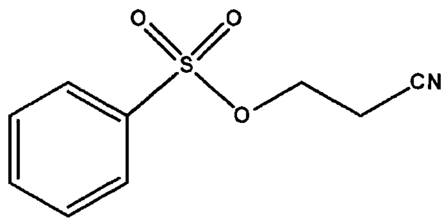

[Formula 2-3]

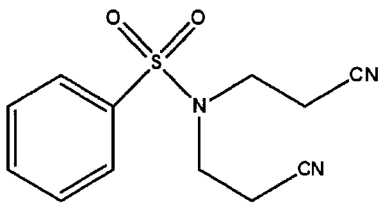

[Formula 2-4]

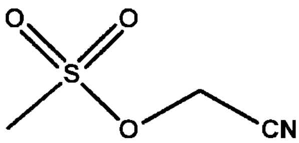

[Formula 2-5]

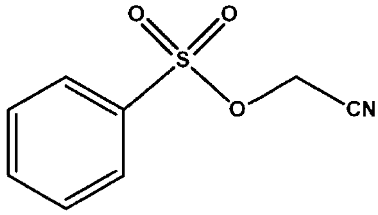

[Formula 2-6]

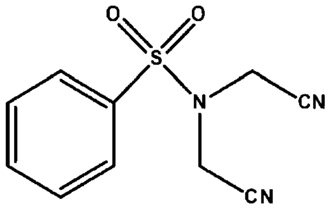

For example, when the electrolyte for a lithium secondary battery includes the above-described sulfonyl compound, a uniform and highly ionic-conductive solid-electrolyte interphase (SEI) film may be formed on the anode surface, and an adsorption-type film may be formed on the cathode surface.

In addition, when a cyano group (CN) is linked to the sulfonyl group in the compound having the structure represented by Formula 1, the lone pair of electrons of nitrogen (N) may form a coordination bond with the cathode, thereby protecting the cathode surface and suppressing side reactions between the cathode and the electrolyte.

Therefore, the high-temperature storage characteristics, high-voltage characteristics, and cycle life characteristics of the lithium secondary battery may be improved.

In some embodiments, the content of the sulfonyl compound may be greater than 0 wt% and not more than 10 wt%, or may be 0.1 wt% to 10 wt% based on the total weight of the electrolyte. For example, the content of the sulfonyl compound may be 0.2 wt% to 8 wt%, 0.3 wt% to 5 wt%, 0.4 wt% to 3 wt%, 0.5 wt% to 2 wt%, or 0.1 wt% to 2 wt% based on the total weight of the electrolyte.

Within the above range, a uniform and highly ion-conductive solid-electrolyte interphase (SEI) film may be formed, without hindering the migration of lithium ions or the activity of the cathode active material.

According to exemplary embodiments, the electrolyte for a lithium secondary battery may further include at least one auxiliary additive selected from a cyclic carbonate compound, a linear carbonate compound, a fluorine-containing carbonate compound, a lithium phosphate compound, a sultone compound, a borate compound, or a sulfate compound.

**In** some embodiments, the electrolyte may further include an auxiliary additive including a cyclic carbonate compound and a fluorine-containing carbonate compound. For example, the electrolyte may further include an auxiliary additive composed of a cyclic carbonate compound and a fluorine-containing carbonate compound.

When the sulfonyl compound and the auxiliary additive are used in combination, a lithium secondary battery having further improved low-temperature characteristics and high-temperature storage characteristics may be efficiently realized.

For example, the cyclic carbonate compound may include vinylene carbonate (VC), vinyl ethylene carbonate (VEC), or others.

For example, the fluorine-containing carbonate compound may include a fluorine atom or a fluorine-substituted group (e.g., a fluorine-substituted alkyl group such as $-CF_3$) bonded to at least one carbon atom of the carbonate compound.

In some embodiments, the fluorine-containing carbonate compound may include a fluorine-containing cyclic carbonate compound having a ring structure. For example, the fluorine-containing cyclic carbonate compound may have a 5- to 7-membered ring structure.

**For** example, the fluorine-containing cyclic carbonate compound may include fluoroethylene carbonate (FEC), etc.

**In** some embodiments, the lithium phosphate compound may include a fluorine-containing lithium phosphate compound.

For example, the fluorine-containing lithium phosphate compound may include a fluorine atom or a fluorine-substituted group (e.g., a fluorine-substituted alkyl group such as $-CF_3$) bonded to a phosphorus atom of the lithium phosphate compound.

**In** some embodiments, the fluorine-containing lithium phosphate compound may include lithium difluoropho-

sphate ($LiPO_2F_2$), lithium difluoro bis(oxalato) phosphate, or others. For example, the fluorine-containing lithium phosphate compound may include lithium difluorophosphate ($LiPO_2F_2$).

In some embodiments, the sultone compound may include at least one selected from at least one of an alkyl sultone compound or an alkenyl sultone compound.

In some embodiments, the sultone compound may include both an alkyl sultone compound and an alkenyl sultone compound.

For example, the alkyl sultone compound may include 1,3-propane sultone (PS), and 1,4-butane sultone, etc.

For example, the alkenyl sultone compound may include ethene sultone, 1,3-propene sultone (PRS), 1,4-butene sultone, and 1-methyl-1,3-propene sultone, etc.

In some embodiments, the sulfate compound may include a cyclic sulfate compound having a ring structure. The cyclic sulfate compound may have a 5- to 7-membered ring structure.

For example, the cyclic sulfate compound may include 1,2-ethylene sulfate (ESA), trimethylene sulfate (TMS), 1,2-propylene sulfate, or methyltrimethylene sulfate (MTMS), etc.

For example, the cyclic sulfite compound may include ethylene sulfite, butylene sulfite, etc.

For example, the borate compound may include lithium bis(oxalate) borate, etc.

In one embodiment, the auxiliary additives may include fluoroethylene carbonate (FEC) and/or vinyl ethylene carbonate (VEC).

In one embodiment, the content of the auxiliary additive may be 0.01 wt% to 10 wt% based on the total weight of the electrolyte.

For example, the total content of the auxiliary additive may be 0.05 wt% to 9 wt%, 0.5 wt% to 8 wt%, 0.8 wt% to 7 wt%, 1.0 wt% to 6 wt%, 1.5 wt% to 5 wt%, or 2 wt% to 4 wt% based on the total weight of the electrolyte.

Within the above range, the durability of the SEI may be enhanced without inhibiting the function of the sulfonyl compound.

In some embodiments, the ratio of the total weight of the auxiliary additive to the weight of the sulfonyl compound in the electrolyte may be in the range of 0.1 to 15.

For example, the weight ratio may be in the range of 0.2 to 14, 0.3 to 13, 0.4 to 12, or 0.5 to 10. Within this range, the high-temperature storage characteristics and low-temperature characteristics of the lithium secondary battery may be further improved.

In one embodiment, a cyclic carbonate compound and a fluorine-containing carbonate compound may be used together as the auxiliary additive.

In some embodiments, the auxiliary additive may further include at least one selected from a borate compound, a nitrile compound, an amine compound, a silane compound, or a benzene compound.

**For** example, the borate compound may include at least one selected from lithium tetraphenyl borate or lithium difluoro(oxalato)borate (LiODFB).

For example, the nitrile compound may include at least one selected succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, or 4-fluorophenylacetonitrile.

For example, the amine compound may include at least one of triethanolamine, ethylenediamine, or fluorophenylacetonitrile.

For example, the silane compound may include tetravinylsilane, etc.

For example, the benzene compound may include at least one of monofluorobenzene, difluorobenzene, trifluorobenzene, or tetrafluorobenzene.

In some embodiments, the secondary battery may include an organic solvent, and the organic solvent may include an organic compound that has sufficient solubility for the lithium salt, the sulfonyl compound, and the auxiliary additive, and is electrochemically stable without exhibiting reactivity in the lithium secondary battery. Here, the organic solvent may be included in an amount of 50 wt% or more, 60 wt% or more, or 70 wt% or more based on the total weight of the electrolyte.

In some embodiments, the organic solvent may include at least one of a carbonate-based solvent, an ester-based solvent, an ether-based solvent, a ketone-based solvent, an alcohol-based solvent and an aprotic solvent.

In some embodiments, the organic solvent may include a carbonate-based solvent, and the carbonate-based solvent may include a linear carbonate-based solvent and a cyclic carbonate-based solvent.

For example, the linear carbonate-based solvent may include at least one of dimethyl carbonate (DMC), ethyl methyl carbonate (EMC), diethyl carbonate (DEC), methyl propyl carbonate, ethyl propyl carbonate, dipropyl carbonate, methyl acetate, ethyl acetate, or propyl acetate.

For example, the cyclic carbonate-based solvent may include at least one of ethylene carbonate (EC), propylene carbonate (PC), or butylene carbonate, etc.

In some embodiments, the organic solvent may include a larger amount of the linear carbonate-based solvent

than the cyclic carbonate-based solvent, based on volume.

In some embodiments, the ratio of the volume of the cyclic carbonate-based solvent to the volume of the linear carbonate-based solvent in the organic solvent may be in the range of 1/9 to 1. For example, the volume ratio may be in the range of 1/9 to 1, 1/9 to 2/3, 1/6 to 2/3, or 1/4 to 2/3. Within this range, the high-temperature storage characteristics and low-temperature characteristics of the lithium secondary battery may be further improved.

For example, the ester-based solvent may include at least one of methyl acetate (MA), ethyl acetate (EA), n-propyl acetate (n-PA), 1,1-dimethylethyl acetate (DMEA), methyl propionate (MP), ethyl propionate (EP), γ-butyrolactone (GBL), decanolide, valerolactone, mevalonolactone or caprolactone.

For example, the ether-based solvent may include at least one of dibutyl ether, tetraethylene glycol dimethyl ether (TEGDME), diethylene glycol dimethyl ether (DEGDME), dimethoxyethane, tetrahydrofuran (THF) or 2-methyltetrahydrofuran.

For example, the ketone-based solvent may include cyclohexanone, etc.

For example, the alcohol-based solvent may include at least one of ethyl alcohol or isopropyl alcohol.

For example, the aprotic solvent may include at least one of a nitrile-based solvent, an amide-based solvent (e.g., dimethylformamide), a dioxolane-based solvent (e.g., 1,3-dioxolane), or a sulfolane-based solvent.

In some embodiments, the electrolyte may include a lithium salt.

The lithium salt may be represented by $Li^+X^-$, and as an anion (X-) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, or $(CF_3CF_2SO_2)_2N^-$, etc. may be exemplified.

In some embodiments, the lithium salt may include at least of $LiPF_6$, $LiClO_4$, $LiBF_4$, LiFSI, LiTFSI, $LiSO_3CF_3$, LiBOB, LiFOB, LiDFOB, LiDFBP, LiTFOP, $LiPO_2F_2$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN or $LiC(CF_3SO_2)_3$.

In one embodiment, the lithium salt may include at least one of $LiPF_6$, LiFSI or LiTFSI.

In some embodiments, the lithium salt may be included in a concentration of 0.01 M to 5 M, 0.01 M to 4 M, 0.5 M to 3 M, or 0.5 M to 2 M based on the organic solvent. Within this concentration range, lithium ions and/or electrons may migrate smoothly during charging and discharging of the lithium secondary battery.

FIGS. 1 and 2 are schematic plan and cross-sectional views, respectively, illustrating a lithium secondary battery according to exemplary embodiments. FIG. 2 is a cross-sectional view taken along line I-I' of FIG. 1.

Referring to FIGS. 1 and 2, the lithium secondary battery may include an electrode assembly 150 including a cathode 100 and an anode 130. The electrode assembly may further include a separator 140, a solid electrolyte layer, or a semi-solid electrolyte layer interposed between the cathode and the anode.

For example, the electrode assembly 150 may include cathodes 100 and anodes 130 that are repeatedly stacked, and the electrode assembly 150 may be accommodated in a case 160 together with the above-described electrolyte according to exemplary embodiments so as to be impregnated.

The cathode 100 may include a cathode current collector 105 and a cathode active material layer 110 disposed on at least one surface of the cathode current collector 105.

For example, the cathode current collector 105 may include stainless steel, nickel, aluminum, titanium, or an alloy thereof. The cathode current collector may also include aluminum or stainless steel having a surface treated with carbon, nickel, titanium or silver. For example, the cathode current collector may have a thickness of 10 μm to 50 μm, but is not limited thereto.

For example, the cathode active material may include a compound capable of reversibly intercalating and deintercalating lithium ions.

In some embodiments, the cathode may include lithium metal oxide particles having a single-particle structure.

As used herein, the term "single-particle structure" includes, for example, a single-particle structure in which two or more but fewer than 20, or 2 to 10 single particles are observed attached to or closely adhered to one another (for example, in a scanning electron microscope (SEM) image).

As used herein, the term "single-particle structure" further includes secondary particles, which may have a spherical form, in which a plurality of primary particles are integrally merged together to form a substantially single particle.

In some embodiments, the lithium metal oxide may have a structure in which a plurality of primary particles are integrally merged together to form a substantially single particle.

For example, the lithium metal oxide may have a granular or spherical single-particle form.

For example, the single-particle structure may be identified based on ion images obtained by analyzing a particle cross-section using a focused ion beam (FIB).

According to exemplary embodiments, in a cross-sectional image of the lithium metal oxide particles obtained using a focused ion beam (FIB), the average value of the particle diameters based on the major axis may be 1 μm or more. For example, in a cross-sectional image analysis of 10 or more lithium metal oxide particles obtained using the focused ion beam (FIB), the average value of the particle diameters based on the major axis may be 1 μm to 20 μm.

In some embodiments, the single particles may have a median particle diameter (D50, based on the major axis) of 2 μm to 20 μm. According to some embodiments, the median particle diameter (D50, based on the major axis) of the single particles may be 2 μm to 10 μm, 3 μm to 10 μm, or 3 μm to 5 μm.

In some embodiments, the cathode may include a cathode active material, and the cathode active material may include a lithium nickel metal oxide.

The lithium nickel metal oxide may further include at least one of cobalt (Co), manganese (Mn) and aluminum (Al). In some embodiments, the lithium nickel metal oxide may further include cobalt (Co) or manganese (Mn).

In some embodiments, the nickel content of the lithium metal oxide particles, excluding lithium and oxygen, may be 50 mol% to 70 mol%, 50 mol% to 65 mol%, or 55 mol% to 65 mol%. Within this nickel content range, sufficient capacity of the lithium secondary battery may be ensured.

In some embodiments, the cathode active material or the lithium nickel metal oxide may include a layered structure or a crystal structure represented by Formula A below.

[Formula A] $Li_xNi_aM_bO_{2+z}$

In Formula A, x, a, b and z may satisfy $0.9 \leq x \leq 1.2$, $0.5 \leq a < 0.7$, $0.01 \leq b \leq 0.5$, and $-0.5 \leq z \leq 0.1$. As described above, M may include Co, Mn and/or Al, and may further include Co and/or Mn.

In some embodiments, in Formula A, a may satisfy $0.5 \leq a \leq 0.65$ or $0.55 \leq a \leq 0.65$.

The chemical structure represented by Formula A indicates a bonding relationship among elements included in the layered structure or the crystal structure of the cathode active material, and may include the presence of additional elements. For example, M includes Co and/or Mn, and Co and/or Mn may be provided as main active elements of the cathode active material together with Ni. Here, it should be understood that Formula A is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula A.

**The** auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may also act, for example, as an auxiliary active element that contributes to the capacity/output activity of the cathode active material together with Co or Mn, such as Al.

In some embodiments, the auxiliary elements may further include at least one element of Al, W, Zr, Ti, Y or B. In this case, the stability of the chemical structure/crystal structure of the lithium metal oxide may be enhanced.

In one embodiment, the auxiliary element may include at least three elements of Al, W, Zr, Ti or Y. In one embodiment, the auxiliary element may include at least four elements of Al, W, Zr, Ti or Y. For example, the auxiliary element may include Al, W and Zr, and optionally, Y and/or Ti.

In one embodiment, the auxiliary element may include Al, W, Zr and/or Y.

For example, the cathode active material or the lithium metal oxide may include a layered structure or a crystal structure represented by Formula A-1 below.

[Formula A-1] $Li_xNi_aM1_{b1}M2_{b2}O_{2+z}$

**In** Formula A-1, M1 may include Co, Mn, and/or Al. M2 may include the above-described auxiliary elements. In Formula A-1, x, a, bl, b2 and z may satisfy $0.9 \leq x \leq 1.2$, $0.5 \leq a < 0.7$, $0.01 \leq b1+b2 \leq 0.5$, and $-0.5 \leq z \leq 0.1$.

In some embodiments, in Formula A-1, a may satisfy $0.5 \leq a \leq 0.65$ or $0.55 \leq a \leq 0.65$.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may be present on the surface of the lithium metal oxide particle, or may penetrate through the surface of the lithium metal composite oxide particle to be incorporated into the bonding structure represented by Formula A or Formula A-1.

The cathode active material may include a nickel-cobalt-manganese (NCM)-based lithium oxide. Nickel (Ni) may serve as a transition metal associated with the output and capacity of the lithium secondary battery.

For example, the cathode active material may be dispersed in a solvent to prepare a cathode slurry. The cathode slurry may be coated on the cathode current collector 105, and then dried and roll-pressed to fabricate the cathode 100. The coating process may be performed using methods such as gravure coating, slot die coating, simultaneous multilayer

die coating, imprinting, doctor blade coating, dip coating, bar coating or casting, etc., but it is not limited thereto. The cathode slurry may further include a binder, and optionally may further include a conductive material, or a thickener.

Non-limiting examples of solvents used in the preparation of the cathode slurry may include N-methyl-2-pyrrolidone (NMP), dimethylformamide, dimethylacetamide, N,N-dimethylaminopropylamine, ethylene oxide, tetrahydrofuran or others.

The binder may include polyvinylidene fluoride (PVDF), poly(vinylidene fluoride-co-hexafluoropropylene), polyacrylonitrile, polymethylmethacrylate, acrylonitrile butadiene rubber (NBR), poly(butadiene) rubber (BR), styrene-butadiene rubber (SBR) or others. In one embodiment, a PVDF-based binder may be used as the cathode binder.

The conductive material may be added to the cathode slurry layer to enhance the conductivity thereof and/or the mobility of lithium ions or electrons. For example, the conductive material may include carbon-based conductive materials such as graphite, carbon black, acetylene black, Ketjen black, graphene, carbon nanotubes, vapor-grown carbon fibers (VGCF), or carbon fibers; and/or metal-based conductive materials such as tin, tin oxide, or titanium oxide; or perovskite materials such as $LaSrCoO_3$, or $LaSrMnO_3$.

As the thickener, for example, carboxymethyl cellulose (CMC) may be used.

The anode 130 may include an anode current collector 125 and an anode active material layer 120 on the anode current collector 125.

For example, non-limiting examples of the anode current collector 125 may include a copper foil, nickel foil, stainless steel foil, titanium foil, nickel foam, copper foam, or a polymer substrate coated with a conductive metal. The anode current collector may have, for example, a thickness of 10 $\mu$m to 50 $\mu$m, but it is not limited thereto.

The anode slurry layer may include an anode active material. As the anode active material, a material capable of adsorbing and desorbing lithium ions may be used. For example, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material may be used.

Examples of the amorphous carbon may include hard carbon, soft carbon, coke, mesocarbon microbead (MCMB), mesophase pitch-based carbon fiber (MPCF) or others.

Examples of the crystalline carbon may include graphite-based carbon such as natural graphite, artificial graphite, graphitized coke, graphitized MCMB, graphitized MPCF or others.

The lithium metal may include pure lithium metal or lithium metal having a protective layer formed thereon for suppressing dendrite growth, etc. In one embodiment, a lithium metal-containing layer deposited or coated on the anode current collector may be used as the anode active material layer. In one embodiment, a lithium thin-film layer may be used as the anode active material layer.

Elements included in the lithium alloy may include aluminum, zinc, bismuth, cadmium, antimony, silicon, lead, tin, gallium or indium, etc.

The silicon-containing active material may provide further increased capacity characteristics. The silicon-containing active material may include Si, $SiO_x$ ($0<x<2$), a silicon-carbon composite, a metal-doped silicate, or $SiO_x$ ($0<x<2$). The metal may include lithium and/or magnesium.

For example, the anode active material may be dispersed in a solvent to prepare an anode slurry. The anode slurry may be coated on the anode current collector, and then dried and roll-pressed to fabricate an anode. The coating process may be performed using methods such as gravure coating, slot die coating, simultaneous multilayer die coating, imprinting, doctor blade coating, dip coating, bar coating or casting, etc., but it is not limited thereto. The anode slurry may further include a binder, and optionally may further include a conductive material, or a thickener.

In some embodiments, the anode may include an anode active material layer in the form of a lithium metal formed through a deposition/coating process.

Non-limiting examples of the solvent for the anode slurry may include water, purified water, deionized water, distilled water, ethanol, isopropanol, methanol, acetone, n-propanol, t-butanol, etc.

The above-described materials that can be used when manufacturing the cathode as the binder, conductive material and thickener may also be used for the anode.

In some embodiments, a styrene-butadiene rubber (SBR)-based binder, carboxymethyl cellulose (CMC), polyacrylic acid-based binder, poly(3,4-ethylenedioxythiophene) (PEDOT)-based binder, etc.may be used as an anode binder.

In one embodiment, the separator 140 may be interposed between the cathode 100 and the anode 130. The separator may prevent an electrical short-circuit between the cathode and the anode, and maintain the flow of ions between the cathode and anode. According to an embodiment, the separator may have a thickness of 10 $\mu$m to 20 $\mu$m, but in the present disclosure, it is not limited thereto.

The separator may include a porous polymer film or a porous non-woven fabric. The porous polymer film may include a polyolefin polymer such as an ethylene polymer, propylene polymer, ethylene/butene copolymer, ethylene/-hexene copolymer, or ethylene/methacrylate copolymer. The porous non-woven fabric may include glass fibers having a high melting point, polyethylene terephthalate fibers or others.

The separator may also include a ceramic material. For example, inorganic particles may be coated on the polymer film or dispersed in the polymer film to improve heat resistance.

The separator may have a single-layer or multilayer structure including the above-described polymer film and/or non-woven fabric.

According to exemplary embodiments, the lithium secondary battery may have an operating voltage of 4.3 V to 4.7 V. According to some embodiments, the lithium secondary battery may have an operating voltage of 4.35 V to 4.5 V. Accordingly, the battery may be operated in a high-voltage range.

According to exemplary embodiments, the cathode 100, the anode 130, and the separator 140 may be repeatedly disposed to form the electrode assembly 150. In some embodiments, the electrode assembly 150 may have a jelly roll shape formed by winding, stacking, z-folding, or stack-folding the separator 140.

In one embodiment, the electrode assembly 150 may have a jelly roll shape formed by winding the cathode 100, the anode 130, and the separator 140 together. In one embodiment, the electrode assembly 150 may have a jelly roll shape in which the notched cathodes and anodes are arranged in spaces formed by repeatedly z-folding the separator 140.

In one embodiment, the electrode assembly may be formed by repeatedly stacking the cathode, the anode, and the separator, each being cut or separated into layers.

For example, electrode tabs (cathode tabs and anode tabs) may protrude from the cathode current collector 105 and the anode current collector 125, respectively, and may extend to one side of the case 160. The electrode tabs may be welded together with the one side of the case 160 and connected to electrode leads (a cathode lead 107 and an anode lead 127) that extend or are exposed to the outside of the case 160.

For example, a pouch-type case, a prismatic case, a cylindrical case, or a coin-type case may be used.

The electrode assembly 150 may be accommodated in the case 160 together with the above-described electrolyte to define the lithium secondary battery.

EXAMPLE 1

**Synthesis of Additive I (2-cynoethyl methanesulfonate)**

100 mL of dichloromethane, 3-hydroxypropionitrile (14.2 g, 200 mmol), and triethylamine (27.9 mL, 200 mmol) were sequentially added to a round-bottom flask and stirred. The mixture was cooled to 0°C, and methanesulfonyl chloride (15.5 mL, 200 mmol) was slowly added. The mixture was then gradually heated to room temperature and stirred for 6 hours.

After completion of stirring, the reaction mixture was washed with distilled water. The organic layer was then concentrated under reduced pressure to remove the solvent and purified by silica gel column chromatography to obtain 16.4 g of Additive I as a white solid having the structure represented by Formula 2-1 below (yield: 55%). The $^1$H NMR analysis results for Additive I are as follows.

$^1$H-NMR (500 MHz, $CDCl_3$): 4.42 (2H, t), 3.12 (3H, s), 2.85 (2H, t)

[Formula 2-1]

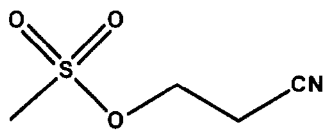

**Preparation of electrolyte**

**A** 1.2 M $LiPF_6$ solution (containing a mixed solvent of ethylene carbonate (EC)/ethyl methyl carbonate (EMC) at a volume ratio of 25:75) was prepared.

Based on the total electrolyte weight (100 wt%), 1 wt% fluoroethylene carbonate (FEC), 2 wt% vinylene carbonate (VC), and 0.5 wt% of Additive I having the structure represented by Formula 2-1 below were added to the $LiPF_6$ solution to prepare an electrolyte.

[Formula 2-1]

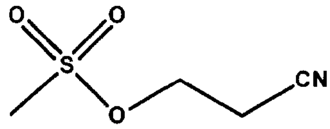

**Manufacture of lithium secondary battery sample**

A cathode slurry was prepared by mixing and dispersing $LiNi_{0.6}Co_{0.1}Mn_{0.3}O_2$ (diameter: 3.5 μm) having a single-particle structure as a cathode active material, carbon nanotubes as a conductive material, and polyvinylidene fluoride (PVdF) as a binder at a weight ratio of 97:1:2 in N-methyl-2-pyrrolidone (NMP).

The cathode slurry was uniformly applied to an aluminum foil (thickness: 15 μm) having a protrusion part (a cathode tab) on one side, excluding the protrusion part, and then dried and roll-pressed to fabricate a cathode.

An anode slurry was prepared by mixing an anode active material, in which artificial graphite and natural graphite was mixed at a weight ratio of 7:3, graphite as a conductive material, and a binder, in which styrene-butadiene rubber (SBR) and a thickener was mixed at a weight ratio 1:1, at a weight ratio of 95:3:2 in distilled water.

The anode slurry was uniformly applied to a copper foil (thickness: 15 μm) having a protrusion part (an anode tab) on one side, excluding the protrusion part, and then dried and roll-pressed to fabricate an anode.

**A** polyethylene separator (thickness: 20 μm) was interposed between the cathode and the anode to form an electrode assembly. Then, a cathode lead and an anode lead were welded and connected to the cathode tab and the anode tab, respectively.

The electrode assembly was placed in a pouch (case) so that some regions of the cathode lead and anode lead were exposed to the outside, and three sides of the pouch were sealed, leaving one side as an electrolyte injection region.

After injecting the electrolyte prepared in (1) above through the electrolyte injection region, the remaining side as the electrolyte injection region was also sealed, followed by impregnation for 12 hours to manufacture a lithium secondary battery sample.

EXAMPLE 2

**Synthesis of Additive II (2-cyanoethyl benzenesulfonate)**

100 mL of dichloromethane, 3-hydroxypropionitrile (14.0 mL, 200 mmol), and pyridine (16.1 mL, 200 mmol) were sequentially added to a round-bottom flask and stirred. The mixture was cooled to 0°C, and benzenesulfonyl chloride (25.5 mL, 200 mmol) was slowly added. The mixture was gradually heated to room temperature and stirred for 6 hours.

After completion of stirring, the reaction mixture was washed with distilled water. The organic layer was then concentrated under reduced pressure to remove the solvent and purified by silica gel column chromatography to obtain 27.5 g of Additive II as a clear liquid having the structure represented by Formula 2-2 below (yield: 65%). The $^1$H-NMR analysis results for Additive II are as follows.

$^1$H-NMR (500 MHz, $CDCl_3$): 7.94 (2H, m), 7.72 (1H, m), 7.60 (2H, m), 4.25 (2H, t), 2.76 (2H, t)

[Formula 2-2]

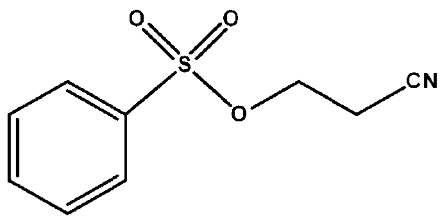

An electrolyte and a lithium secondary battery sample were manufactured in the same manner as in Example 1, except that 0.5 wt% of Additive II having the structure represented by Formula 2-2 below was used instead of Additive I.

[Formula 2-2]

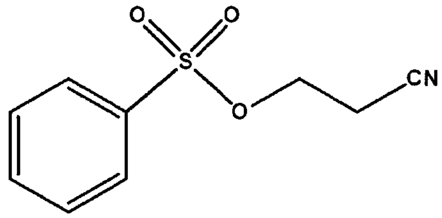

EXAMPLE 3

**Synthesis Example of Additive III (N,N-bis(2-cyanoethyl)benzenesulfonamide)**

**100** mL of dichloromethane, 3,3'-iminodipropionitrile (24.6 g, 200 mmol), and triethylamine (27.9 mL, 200 mmol) were sequentially added to a round-bottom flask and stirred. The mixture was cooled to 0°C, and benzenesulfonyl chloride (25.5 mL, 200 mmol) was slowly added. The mixture was then gradually heated to room temperature and stirred for 6 hours.

After completion of stirring, the reaction mixture was washed with distilled water. The organic layer was then concentrated under reduced pressure to remove the solvent and purified by silica gel column chromatography to obtain 50.0 g of Additive III as a white solid having the structure represented by Formula 2-3 below (yield: 95%). The $^1$H-NMR analysis results for Additive III are as follows.
$^1$H-NMR (500 MHz, $CDCl_3$): 7.85 (2H, m), 7.68 (1H, m), 7.60 (2H, m), 3.51 (4H, t), 2.78 (4H, t)

[Formula 2-3]

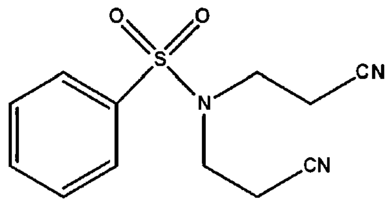

An electrolyte and a lithium secondary battery sample were manufactured in the same manner as in Example 1, except that 0.5 wt% of Additive III having the structure represented by Formula 2-3 below was used instead of Additive I.

[Formula 2-3]

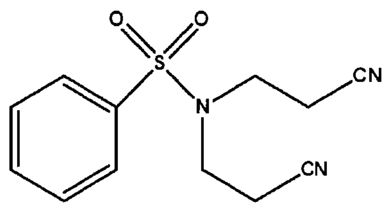

COMPARATIVE EXAMPLE 1

An electrolyte and a lithium secondary battery sample were manufactured in the same manner as in Example 1, without using any separate additive.

COMPARATIVE EXAMPLE 2

An electrolyte and lithium secondary battery sample were manufactured in the same manner as in Example 1, except that 0.5 wt% of an additive having the structure represented by Formula IV below was used instead of Additive I.

[Formula IV]

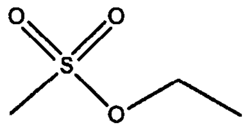

The compositions of the electrolytes prepared in the examples and comparative examples are described in Table 1 below.

TABLE 1

| | Lithium salt | Additive (wt%) | Auxiliary additive (wt%) | |
|---|---|---|---|---|
| | | | FEC | VC |
| Example 1 | $LiPF_6$ (1.2M) | Additive I (0.5) | 1 | 2 |
| Example 2 | $LiPF_6$ (1.2M) | Additive II (0.5) | 1 | 2 |
| Example 3 | $LiPF_6$ (1.2M) | Additive III (0.5) | 1 | 2 |
| Comparative Example 1 | $LiPF_6$ (1.2M) | - | 1 | 2 |
| Comparative Example 2 | $LiPF_6$ (1.2M) | Additive IV (0.5) | 1 | 2 |

The components described in Table 1 are as follows:

FEC: Fluoroethylene carbonate
**VC:** Vinylene carbonate

**Evaluation of initial performance**

(1) Evaluation of initial capacity

The lithium secondary batteries of the examples and comparative examples were subjected to three cycles of charging at 25°C at a 0.5 C-rate CC/CV (4.35 V, 0.05C cut-off), and discharging using a 0.5 C-rate CC (2.7 V cut-off).
The discharge capacity value at the third cycle was defined as the initial capacity of the lithium secondary batteries, as described in Table 2 below.

(2) Evaluation of initial resistance (D DCIR) (25°C)

The lithium secondary batteries of the examples and comparative examples were tested at a 60% state of charge (SOC) point at 25°C by sequentially varying the C-rate to 0.2C, 0.5C, 1.0C, 1.5C, 2.0C, 2.5C, and 3.0C, while performing charging and discharging for 10 seconds at each C-rate. The terminal voltage points were plotted to construct a linear equation, and the slope of the resulting line was adopted as the DCIR. The measured values are described in Table 2 below.

**Evaluation of high-temperature storage characteristics (60°C)**

(1) Measurement of capacity retention after high-temperature storage

The lithium secondary batteries of the examples and comparative examples were subjected to three cycles of charging at 25°C at a 0.5 C-rate CC/CV (4.35 V, 0.05C cut-off), and discharging using a 0.5 C-rate CC (2.7 V cut-off). The discharge capacity C1 was measured at the third cycle.
The lithium secondary batteries, charged to 100% SOC, were then stored at 60°C for two weeks, followed by resting at room temperature for 30 minutes. Afterward, a 0.5C-rate CC discharge (2.7 V cut-off) was performed to measure the discharge capacity C2. The capacity retention was calculated according to the following equation, and the results are described in Table 2 below.

$$\text{Capacity retention (\%)} = C2 / C1 \times 100$$

(2) Evaluation of resistance increase rate after high-temperature storage

The lithium secondary batteries of the examples and comparative examples were exposed to air at 60°C for two weeks using a constant-temperature device. Then, at 25°C and a 60% state of charge (SOC), the C-rate was sequentially varied to 0.2C, 0.5C, 1.0C, 1.5C, 2.0C and 2.5C, while performing charging and discharging for 10 seconds at each C-rate. The terminal voltage points were plotted to construct a linear equation, and the slope of the resulting line was adopted as the DCIR.

The DCIR measured during the initial resistance evaluation was designated as R1, and the DCIR measured after high-temperature storage was designated as R2. The resistance increase rate was calculated according to the following equation, and the results are described in Table 2 below.

$$\text{Resistance increase rate (\%)} = \{(R2 - R1) / R1\} \times 100$$

(3) Evaluation of battery thickness increase rate after high-temperature storage

The lithium secondary batteries of the examples and comparative examples were charged at 25°C at a 0.5C-rate CC/CV (4.35 V, 0.05C cut-off) to 100% SOC, and then the battery thickness T1 was measured. The charged lithium secondary batteries were then exposed to air at 60°C for two weeks using a constant-temperature device, and the battery thickness T2 was measured.

The battery thickness was measured using a flat plate thickness measuring device (Mitutoyo, 543-490B). The battery thickness increase rate was calculated according to the following equation, and the results are described in Table 2.

$$]\text{Battery thickness increase rate (\%)} = \{(T2-T1) / T1\} \times 100$$

TABLE 2

| | | Example 1 | Example 2 | Example 3 | Comparative Example 1 | Comparative Example 2 |
|---|---|---|---|---|---|---|
| Initial performance | Capacity (mAh) | 1892 | 1871 | 1894 | 1850 | 1857 |
| | D_DCIR (mΩ) | 43.6 | 40.7 | 43.4 | 45.4 | 45.1 |
| High-temperature storage characteristics (at 60°C for 2 weeks) | Capacity retention (%) | 86.2 | 86.3 | 86.0 | 83.8 | 83.1 |
| | Resistance increase rate (%) | 95.3 | 100.2 | 110.0 | 117.4 | 115.3 |
| | Thickness increase rate (%) | 97.1 | 98.1 | 97.7 | 98.9 | 103.7 |

Referring to Table 2, the lithium secondary batteries of the examples exhibited improved initial capacity and high-temperature (60°C) storage characteristics.

On the other hand, the lithium secondary batteries of Comparative Examples 1 and 2, which either did not use a sulfonyl compound containing a cyano group or used an additive containing a sulfonyl compound without a cyano group, exhibited lower initial performance and inferior high-temperature storage characteristics compared with the examples.

The invention is also defined by the following aspects:

Aspect 1. An electrolyte for a lithium secondary battery, comprising:

a sulfonyl compound including a cyano group; and
a lithium salt.

Aspect 2. The electrolyte for a lithium secondary battery of aspect 1, wherein the sulfonyl compound includes a sulfonyl ester compound or a sulfonyl amide compound.
Aspect 3. The electrolyte for a lithium secondary battery of aspect 1 or 2, wherein the sulfonyl compound is represented by Formula 1 below:

[Formula 1]

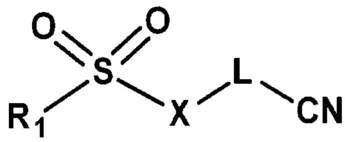

wherein, in Formula 1:

$R_1$ is a substituted or unsubstituted alkyl group having 1 to 30 carbon atoms, a substituted or unsubstituted alkoxy group having 1 to 30 carbon atoms, or a substituted or unsubstituted aryl group having 6 to 30 carbon atoms;
X is O or NR, R is an alkyl group having 1 to 30 carbon atoms that is unsubstituted or substituted with a cyano group (CN); and
L is a substituted or unsubstituted alkylene group having 1 to 30 carbon atoms.

Aspect 4. The electrolyte for a lithium secondary battery of aspect 3, wherein $R_1$ is a substituted or unsubstituted alkyl group having 1 to 20 carbon atoms, a substituted or unsubstituted alkoxy group having 1 to 20 carbon atoms, or a substituted or unsubstituted aryl group having 6 to 20 carbon atoms;

X is O or NR, R is a CN-substituted alkyl group having 1 to 20 carbon atoms; and
L is a substituted or unsubstituted alkylene group having 1 to 20 carbon atoms.

Aspect 5. The electrolyte for a lithium secondary battery of any one of aspect 1 to 4, wherein the sulfonyl compound includes a compound represented by any one of Formulas 2-1 to 2-6 below:

[Formula 2-1]

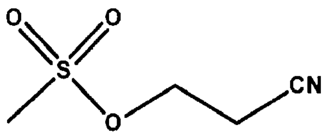

[Formula 2-2]

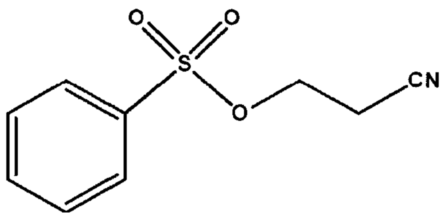

[Formula 2-3]

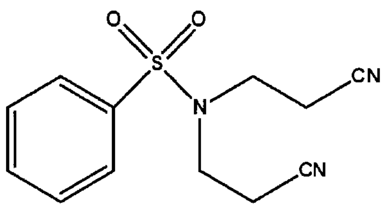

[Formula 2-4]

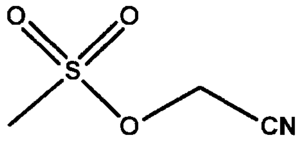

[Formula 2-5]

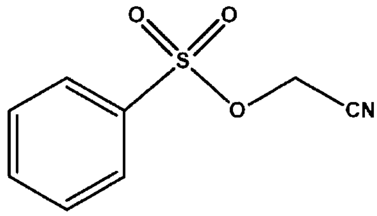

[Formula 2-6]

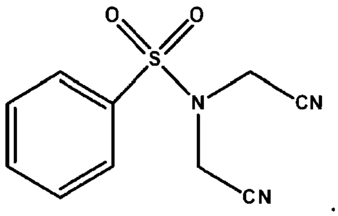

Aspect 6. The electrolyte for a lithium secondary battery of any one of aspect 1 to 5, further comprising an organic solvent, wherein the organic solvent includes at least one of a carbonate-based solvent, an ester-based solvent, an ether-based solvent, a ketone-based solvent, or an aprotic solvent.
Aspect 7. The electrolyte for a lithium secondary battery of any one of aspect 1 to 6, wherein the content of the sulfonyl compound is 0.1% by weight to 10% by weight based on the total weight of the electrolyte for a lithium secondary battery.
Aspect 8. The electrolyte for a lithium secondary battery of any one of aspect 1 to 7, further comprising at least one auxiliary additive selected from a cyclic carbonate compound, a fluorine-containing carbonate compound, a lithium phosphate compound, a sultone compound, a borate compound, or a sulfate compound.
Aspect 9. The electrolyte for a lithium secondary battery of aspect 8, wherein the total content of the auxiliary additive is 0.01% by weight to 10% by weight based on the total weight of the electrolyte for a lithium secondary battery.
Aspect 10. The electrolyte for a lithium secondary battery of any one of aspect 1 to 9, further comprising an auxiliary additive including a cyclic carbonate compound and a fluorine-containing carbonate compound.
Aspect 11. A lithium secondary battery, comprising:

an electrode assembly including a cathode and an anode; and
the electrolyte for a lithium secondary battery of any one of aspect 1 to 10.

Aspect 12. The lithium secondary battery of aspect 11, wherein the cathode includes lithium metal oxide particles.
Aspect 13. The lithium secondary battery of aspect 12, wherein the nickel content of the lithium metal oxide particles, excluding lithium and oxygen, is 50 mol% or more and less than 70 mol%.
Aspect 14. The lithium secondary battery of any one of aspect 11 to 13, wherein the lithium secondary battery has an operating voltage of 4.35 V to 4.5 V.
Aspect 15. The lithium secondary battery of any one of aspect 11 to 13, wherein the cathode or the anode includes a solid-electrolyte interphase (SEI) film on its surface, and
the solid-electrolyte interphase film is formed from the lithium secondary battery electrolyte.

## Claims

**1.** An electrolyte for a lithium secondary battery, comprising:

a sulfonyl compound including a cyano group; and
a lithium salt.

**2.** The electrolyte for a lithium secondary battery of claim 1, wherein the sulfonyl compound includes a sulfonyl ester compound or a sulfonyl amide compound.

**3.** The electrolyte for a lithium secondary battery of claim 1 or 2, wherein the sulfonyl compound is represented by Formula 1 below:

[Formula 1]

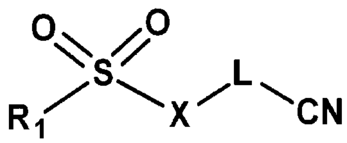

wherein, in Formula 1:

$R_1$ is a substituted or unsubstituted alkyl group having 1 to 30 carbon atoms, a substituted or unsubstituted alkoxy group having 1 to 30 carbon atoms, or a substituted or unsubstituted aryl group having 6 to 30 carbon atoms;
X is O or NR, R is an alkyl group having 1 to 30 carbon atoms that is unsubstituted or substituted with a cyano group (CN); and
L is a substituted or unsubstituted alkylene group having 1 to 30 carbon atoms.

**4.** The electrolyte for a lithium secondary battery of claim 3, wherein $R_1$ is a substituted or unsubstituted alkyl group having 1 to 20 carbon atoms, a substituted or unsubstituted alkoxy group having 1 to 20 carbon atoms, or a substituted or unsubstituted aryl group having 6 to 20 carbon atoms;

X is O or NR, R is a CN-substituted alkyl group having 1 to 20 carbon atoms; and
L is a substituted or unsubstituted alkylene group having 1 to 20 carbon atoms.

**5.** The electrolyte for a lithium secondary battery of any one of claims 1 to 4, wherein the sulfonyl compound includes a compound represented by any one of Formulas 2-1 to 2-6 below:

[Formula 2-1]

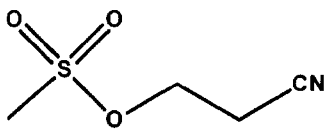

[Formula 2-2]

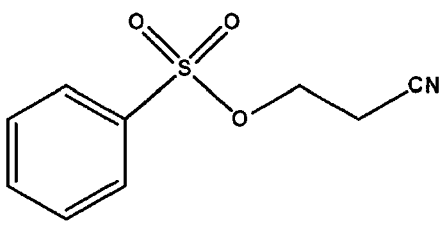

[Formula 2-3]

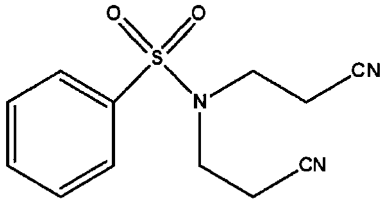

[Formula 2-4]

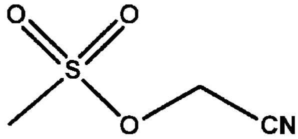

[Formula 2-5]

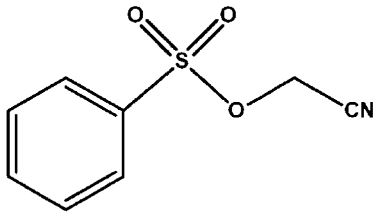

[Formula 2-6]

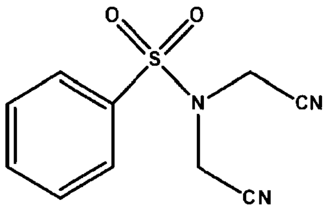

.

6. The electrolyte for a lithium secondary battery of any one of claims 1 to 5, further comprising an organic solvent, wherein the organic solvent includes at least one of a carbonate-based solvent, an ester-based solvent, an ether-based solvent, a ketone-based solvent, or an aprotic solvent.

7. The electrolyte for a lithium secondary battery of any one of claims 1 to 6, wherein the content of the sulfonyl compound is 0.1% by weight to 10% by weight based on the total weight of the electrolyte for a lithium secondary battery.

8. The electrolyte for a lithium secondary battery of any one of claims 1 to 7, further comprising at least one auxiliary additive selected from a cyclic carbonate compound, a fluorine-containing carbonate compound, a lithium phosphate compound, a sultone compound, a borate compound, or a sulfate compound.

9. The electrolyte for a lithium secondary battery of claim 8, wherein the total content of the auxiliary additive is 0.01% by weight to 10% by weight based on the total weight of the electrolyte for a lithium secondary battery.

10. The electrolyte for a lithium secondary battery of any one of claims 1 to 9, further comprising an auxiliary additive including a cyclic carbonate compound and a fluorine-containing carbonate compound.

11. A lithium secondary battery, comprising:

an electrode assembly including a cathode and an anode; and
the electrolyte for a lithium secondary battery of any one of claims 1 to 10.

**12.** The lithium secondary battery of claim 11, wherein the cathode includes lithium metal oxide particles.

**13.** The lithium secondary battery of claim 12, wherein the nickel content of the lithium metal oxide particles, excluding lithium and oxygen, is 50 mol% or more and less than 70 mol%.

**14.** The lithium secondary battery of any one of claims 11 to 13, wherein the lithium secondary battery has an operating voltage of 4.35 V to 4.5 V.

**15.** The lithium secondary battery of any one of claims 11 to 13, wherein the cathode or the anode includes a solid-electrolyte interphase (SEI) film on its surface, and
the solid-electrolyte interphase film is formed from the lithium secondary battery electrolyte.

[FIG. 1]

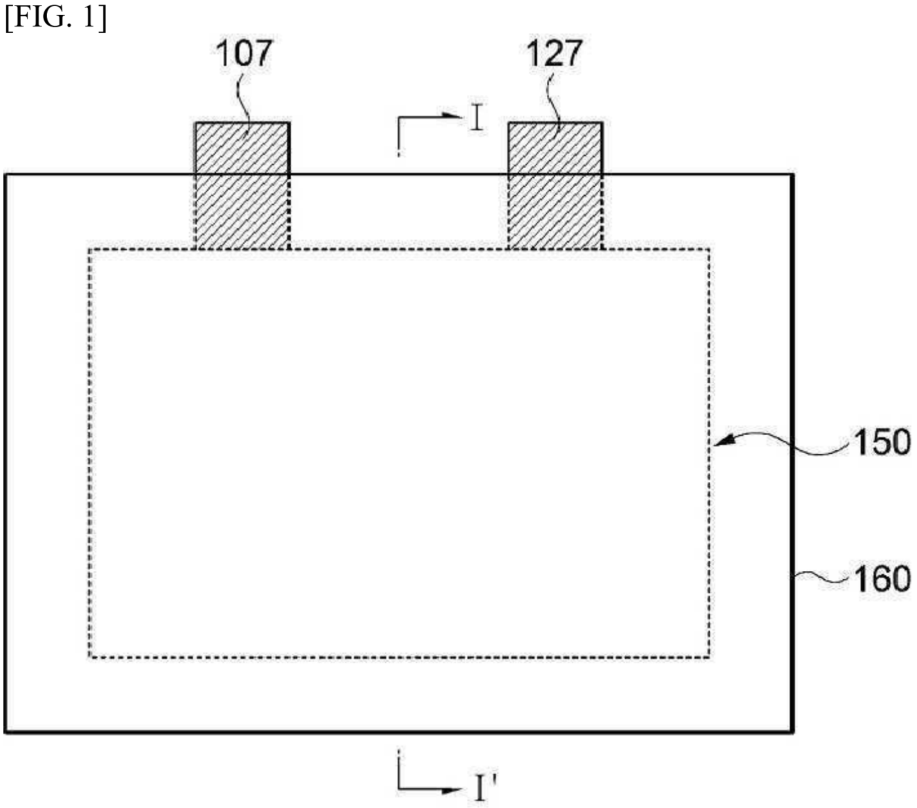


[FIG. 2]

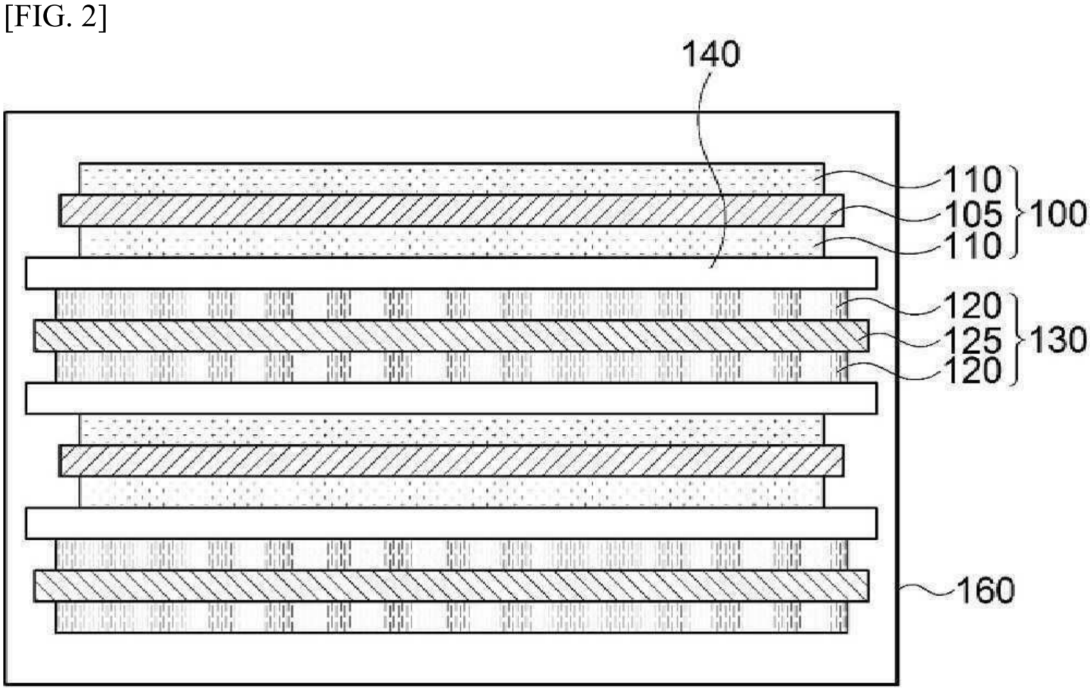

Europäisches Patentamt
European Patent Office
Office européen des brevets

# EUROPEAN SEARCH REPORT

Application Number
EP 25 22 6705

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/059588 A1 (LEE HO C [KR] ET AL) 15 March 2007 (2007-03-15) * paragraphs 50-56; examples 1 and 2 * ----- | 1-3,6-9, 11,14,15 | INV. H01M10/0568 H01M10/42 |
| X | JP 2014 186957 A (MITSUBISHI CHEM CORP) 2 October 2014 (2014-10-02) | 1-4, 6-12,14, 15 | |
| Y | * paragraph 267-271 * ----- | 13 | |
| X | WO 2015/093435 A1 (DAIKIN IND LTD [JP]) 25 June 2015 (2015-06-25) * claim 1; page 82, compounds of formula (7) , (11), 13) * ----- | 1,3,5, 11,14,15 | |
| Y | US 2016/141607 A1 (PARK KWANGJIN [KR] ET AL) 19 May 2016 (2016-05-19) * Page 15, table 1, comparative example 2 * ----- | 13 | |
| | | | TECHNICAL FIELDS SEARCHED (IPC) |
| | | | H01M |

The present search report has been drawn up for all claims

| Place of search | Date of completion of the search | Examiner |
|---|---|---|
| Munich | 11 May 2026 | Bettio, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)
4

# ANNEX TO THE EUROPEAN SEARCH REPORT ON EUROPEAN PATENT APPLICATION NO. EP 25 22 6705

This annex lists the patent family members relating to the patent documents cited in the above-mentioned European search report. The members are as contained in the European Patent Office EDP file on
The European Patent Office is in no way liable for these particulars which are merely given for the purpose of information.

11-05-2026

| Patent document cited in search report | Publication date | Patent family member(s) | Publication date |
| --- | --- | --- | --- |
| US 2007059588 A1 | 15-03-2007 | NONE | |
| JP 2014186957 A | 02-10-2014 | JP 6201363 B2 | 27-09-2017 |
| | | JP 2014186957 A | 02-10-2014 |
| WO 2015093435 A1 | 25-06-2015 | JP 6123913 B2 | 10-05-2017 |
| | | JP WO2015093435 A1 | 16-03-2017 |
| | | US 2016315354 A1 | 27-10-2016 |
| | | WO 2015093435 A1 | 25-06-2015 |
| US 2016141607 A1 | 19-05-2016 | KR 20150062123 A | 05-06-2015 |
| | | US 2016141607 A1 | 19-05-2016 |
| | | US 2018205077 A1 | 19-07-2018 |

EPO FORM P0459

For more details about this annex : see Official Journal of the European Patent Office, No. 12/82